# EUROPEAN PATENT APPLICATION

(11) **EP 4 485 610 A1**
(43) Date of publication of application: **01.01.2025**
(21) Application number: 23796375.6
(22) Date of filing: 25.04.2023
(51) Int. Cl.: H01M 10/06, H01M 4/14, H01M 4/62

(54) **LEAD STORAGE BATTERY**

(30) Priority: 26.04.2022 JP 2022072543
(71) Applicant: GS Yuasa International Ltd., Kisshoin, Minami-ku, Kyoto-shi, Kyoto 601-8520 (JP)
(72) Inventor: KAGOHASHI, Hiroki, Kyoto-shi, Kyoto 601-8520 (JP); HAMANO, Yasuyuki, Kyoto-shi, Kyoto 601-8520 (JP)
(74) Representative: Isarpatent
(86) International application number: PCT/JP2023/016277
(87) International publication number: WO 2023/210635

(57) **Abstract**

A lead-acid battery includes: an element; an electrolyte solution; and a container. The element includes a positive electrode, a negative electrode, and a separator. In a cross section parallel to a bottom part of the container of the lead-acid battery, a ratio Ra of a cross-sectional area of the electrolyte solution present outside an outer edge of the element to a cross-sectional area of the element is 0.20 or less. A ratio Rb of a cross-sectional area of the positive electrode to an area of a region surrounded by an inner edge of the container is 0.30 or more. A lead-acid battery includes: an element; an electrolyte solution; and a container. The element includes a positive electrode, a negative electrode, and a separator. In a cross section parallel to a bottom part of the container of the lead-acid battery, a ratio Ra of an area obtained by excluding a cross-sectional area of the element from a cross-sectional area inside the container storing the element to the cross-sectional area of the element is 0.20 or less. A ratio Rb of a cross-sectional area of the positive electrode to the cross-sectional area inside the container is 0.30 or more.

## Description

### TECHNICAL FIELD

The present invention relates to a lead-acid battery.

### BACKGROUND ART

Lead-acid batteries are in use for various applications, including automotive and industrial applications. The lead-acid batteries include a negative electrode plate, a positive electrode plate, a separator (or mat), and an electrolyte solution and the like. Each plate includes a current collector and an electrode material.

Patent Document 1 proposes a sealed lead-acid battery using fine glass fibers between a positive electrode plate and a negative electrode plate, wherein a ratio (X/Y) of a width dimension (X) of main surfaces of the positive electrode plate and/or the negative electrode plate to a width dimension (Y) between inner walls of a container perpendicular to a plate main surface of a container storing these plates is 0.92 or more.

Patent Document 2 proposes a sealed lead-acid battery in which when the thickness of an element is represented by T, the width of a positive electrode plate constituting the element is represented by W, and the height of the positive electrode plate is represented by H, an electrolyte solution having a volume corresponding to 20% or more of a volume of the element represented by W × H × T is held in the positive electrode plate.

Patent Document 3 proposes a flooded-type lead-acid battery in which an element is disposed together with an electrolyte solution in a container, the element being formed by stacking a positive electrode plate and a negative electrode plate in a state where one of the electrode plates is placed in a bag-shaped separator, wherein a thickness of the element in a stacking direction of the positive electrode plate and the negative electrode plate is 80% or more and 92% or less of an element-storing width of the container.

Patent Document 4 proposes a lead-acid battery. In lead-acid battery, an element in which a positive electrode plate and a negative electrode plate wrapped with a bag separator are alternately stacked, current collecting parts of the positive electrode plates are welded to each other and current collecting parts of the negative electrode plates are welded to each other is stored in a container including a plurality of cell chambers. A rib is not provided on a wall surface of the cell chamber of the container, and a ratio of a thickness b of the element after formation to an internal dimension a between opposing wall surfaces of the cell chamber is in a range of 0.85 ≤ b/a ≤ 1.0.

### PRIOR ART DOCUMENTS

### PATENT DOCUMENTS

Patent Document 1: JP-A-06-314572
Patent Document 2: JP-A-04-104476
Patent Document 3: JP-A-2005-100726
Patent Document 4: JP-A-2015-103330

### SUMMARY OF THE INVENTION

### PROBLEMS TO BE SOLVED BY THE INVENTION

In a lead-acid battery used in a partial state of charge (PSOC), stratification tends to proceed, and cycle durability tends to decrease. Representative examples of the lead-acid battery used in PSOC include a lead-acid battery mounted on a vehicle subjected to idling stop control (idle reduction control or start-stop system).

A main object of the present disclosure is to improve the cycle durability of a lead-acid battery used in PSOC.

### MEANS FOR SOLVING THE PROBLEMS

One aspect of the present invention relates to a lead-acid battery including: an element; an electrolyte solution; and a container. The element includes a positive electrode, a negative electrode, and a separator. In a cross section parallel to a bottom part of the container of the lead-acid battery, a ratio Ra of a cross-sectional area of the electrolyte solution present outside an outer edge of the element to a cross-sectional area of the element is 0.20 or less. A ratio Rb of a cross-sectional area of the positive electrode to an area of a region surrounded by an inner edge of the container is 0.30 or more.

Another aspect of the present invention relates to a lead-acid battery including: an element; an electrolyte solution; and a container. The element includes a positive electrode, a negative electrode, and a separator. In a cross section parallel to a bottom part of the container of the lead-acid battery, a ratio Ra of an area obtained by excluding a cross-sectional area of the element from a cross-sectional area inside the container storing the element to the cross-sectional area of the element is 0.20 or less. A ratio Rb of a cross-sectional area of the positive electrode to the cross-sectional area inside the container is 0.30 or more.

### ADVANTAGES OF THE INVENTION

According to the present disclosure, the cycle durability of the lead-acid battery used in PSOC can be improved.

### BRIEF DESCRIPTION OF THE DRAWINGS

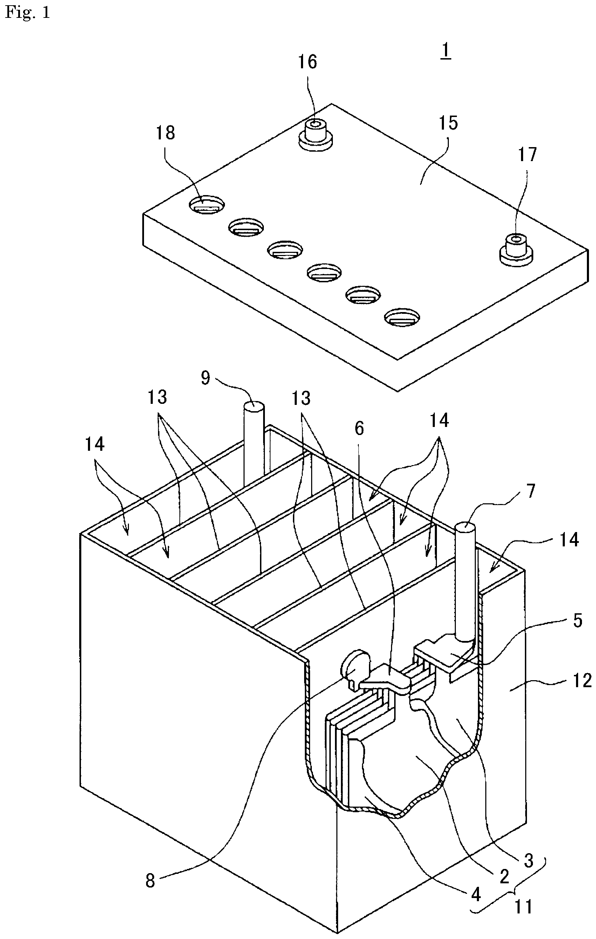

Fig. 1 is a partially cutaway exploded perspective view showing the appearance and internal structure of a lead-acid battery according to one aspect of the present invention.

### MODE FOR CARRYING OUT THE INVENTION

A lead-acid battery according to an embodiment of the present invention includes an element, an electrolyte solution, and a container. The element includes a positive electrode, a negative electrode, and a separator. The electrolyte solution contains water and sulfuric acid. The positive electrode includes a positive current collector and a positive electrode material. The negative electrode includes a negative current collector and a negative electrode material. The positive electrode material is held by the positive current collector, and the negative electrode material is held by the negative current collector. The positive electrode material contains lead dioxide. The negative electrode material contains lead.

The electrode material in the positive electrode material and the negative electrode material is a portion obtained by removing a current collector from a plate (positive electrode or negative electrode). A member such as a mat or a pasting paper (also referred to as a sticking member) may be stuck to the plate. The sticking member is used integrally with the plate and is thus included in the plate. However, the sticking member is not included in the electrode material.

The application of the lead-acid battery is not limited, but the lead-acid battery is mainly assumed to be used in PSOC. For example, a lead-acid battery mounted on a vehicle subjected to idling stop control is used in PSOC. Since the lead-acid battery used in PSOC is often used in a poor charged state, it is considered that the electrolysis of water is less likely to occur, and stratification tends to occur.

The element usually includes a plurality of positive electrodes, a plurality of negative electrodes, and separators, with each separator interposed between the positive electrode and the negative electrode. The positive electrode and the negative electrode are alternately stacked with the separator interposed therebetween. The width direction (hereinafter, referred to as an "x direction") of the element is a direction orthogonal to the stacking direction (hereinafter, referred to as a "y direction") of the positive electrode, the negative electrode, and the separator, and orthogonal to the up-down direction (vertical direction). The up-down direction (vertical direction) is defined as a z direction. Each direction is based on an arrangement direction when the lead-acid battery is used.

The container includes a bottom part, a side wall rising from a peripheral edge of the bottom part, and a lid part closing an opening end part of the side wall. The inside of the container may be divided into a plurality of spaces by partitions. For example, the inside of the container may be divided into a plurality of (for example, six) spaces by partitions parallel to each other. The plurality of partitions may cross each other and be divided into a plurality of (for example, four or more) spaces. For example, a dimension X of the plurality of spaces (cell chambers) in the x direction (the width direction of the element) is larger than a dimension (element length) Y of the element in the y direction (stacking direction). Hereinafter, each parameter may be obtained in each of the plurality of cell chambers to calculate an average value.

A dimension X in the x direction and a dimension Z in the z direction of the element are regulated by a dimension (x) in the x direction and a dimension (z) in the z direction of the plate. The dimension X of the element may be regarded as the dimension (x) of the plate. The dimension (x1) of the positive electrode in the x direction and the dimension (x2) of the negative electrode in the x direction are usually substantially the same. When (x1) and (x2) are different from each other, an average value of (x1) and (x2) may be defined as (x). The dimension Y of the element in the y direction corresponds to an interval between portions disposed on outermost sides in the stacking direction of two members (positive electrode, negative electrode, or separator) disposed on outermost sides in the stacking direction. The cross-sectional area Sg of the element is represented by X × Y.

However, when there is a rib on the surface of the container facing the element, the separator is disposed on the outermost side in the stacking direction, there is a rib on the surface of the separator facing the container, and the element length Y is larger than the distance between the tips of the ribs facing each other in the container, the distance between the tips of the ribs is defined as the element length Y.

Here, in a cross-section CS parallel to the bottom part of the container of the lead-acid battery, a ratio Ra of a cross-sectional area (Se) of the electrolyte solution present outside the outer edge of the element to the cross-sectional area (Sg) of the element is regulated to 0.20 or less. That is, the side wall or the partition of the container is close to the periphery of the element, and a volume in which the electrolyte solution can be retained is limited. The ratio Ra may be 0.15 or less or 0.12 or less.

The cross-sectional area (Sg) of the element may be rephrased as an area of the orthographic projection image of the element with respect to the bottom part of the container. When there is a space between the positive electrode or the negative electrode and the separator, the area of the orthographic projection image of the space is also included in the area of the orthographic projection image of the element.

A ratio Ra in a conventional battery is 0.3, and a ratio Rb is 0.26.

The cross-section CS parallel to the bottom part of the container of the lead-acid battery is the cross section of the lead-acid battery at a height of 2 cm from the back surface (outer surface) of the bottom part of the container. The same applies to a case where the dimension of the cell chamber changes in the height direction of the container. It is important to control the electrolyte solution present at a height of 2 cm from the back surface (outer surface) of the bottom part of the container, that is, below the upper part of the container, in order to improve the cycle durability of the lead-acid battery used in PSOC.

In the cross-section CS, the area (S) of the region surrounded by the inner edge of the container, the cross-sectional area (Sg) of the element, and the cross-sectional area (Se) of the electrolyte solution present outside the outer edge of the element are determined by the following method. The area (S) is a cross-sectional area of a space (cell chamber) storing one element.

In addition, "the cross-sectional area of the electrolyte solution present outside the outer edge of the element" can be rephrased as "the area obtained by removing (the cross-sectional area of the element) from (the cross-sectional area inside the container storing the element)".

"The area of the region surrounded by the inner edge of the container" can be rephrased as "the cross-sectional area inside the container". The "cross-sectional area inside the container" can be rephrased as the "cross-sectional area inside the cell chamber".

### <Area (S)>

Water is poured into a space (cell chamber) for storing the element up to a height of 1.5 cm from the back surface of the bottom part of the container. Next, water is added up to a height of 2.5 cm. The area (S) is obtained from the added water amount. If the added amount of water is 10 cm³, the cross-sectional area of the container is 10 cm².

### <Cross-sectional area (Sg)>

The thickness of each of the positive electrode plate, the negative electrode plate and the separator corresponding to a height of 2 cm from the back surface of the bottom part of the container is measured with a caliper. The thickness of the separator is the total thickness. When the separator includes a rib, the total thickness is a thickness including the rib and a portion (base part) other than the rib. The total thickness is the thickness of the base part when the separator does not include the rib. The dimension (element length Y) of the element in the y direction (stacking direction) is obtained from the following formula. Y = thickness of positive electrode plate × number of positive electrode plates + thickness of negative electrode plate × number of negative electrode plates + number of spaces between plates × thickness of separator (total thickness) + number of separators in contact with container or rib of container × thickness of base part of separator

However, when the element length Y is larger than the distance between the tips of the ribs facing each other in the container, the distance between the tips of the ribs is defined as the element length Y. Next, the dimension (x) of the plate in the x direction (the width of the plate) is measured on a scale. The cross-sectional area Sg is a calculated value of "Sg = element length Y × width of plate (x) = Y × X".

The area S1 surrounded by the inner edge of the container in the cross section of the lead-acid battery at a height of 2 cm from the back surface of the bottom part of the container, the area S2 surrounded by the inner edge of the container in the cross section of the lead-acid battery at a depth of 2 cm from the liquid surface of the container, and the area S3 surrounded by the inner edge of the container in the cross section of the lead-acid battery at an intermediate depth of the liquid surface of the container may be substantially the same. In that case, the flow of the electrolyte solution can be controlled in the entire upper part and lower part of the container, and the effect of improving the cycle durability of the lead-acid battery used in PSOC is enhanced. Note that S1, S2, and S3 being substantially the same means that 0.95 ≤ S1/S2 ≤ 1.05, 0.95 ≤ S2/S3 ≤ 1.05, and 0.95 ≤ S3/S1 ≤ 1.05 are satisfied. Here, the liquid level of the container refers to a liquid level having an ideal height, and refers to a height of an upper limit level imprinted on the container.

The cross-sectional area Se of the electrolyte solution present outside the outer edge of the element is a difference (Se = S - Y × (x)) between the area (S) of the region surrounded by the inner edge of the container (the cross-sectional area of the space (cell chamber) storing the element) and the cross-sectional area (Sg = Y × (x)) of the element. That is, the ratio Ra is represented by (S - Y × (x))/(Y × (x)) = Se/Sg. Since the side wall and the partition are constituent members of the container, the inner edge of the container refers to the inner edge of the side wall or the partition. When the region (cell chamber) surrounded by the inner edge of the container at a height of 2 cm from the back surface of the bottom part of the container is rectangular, the area S is represented by a product (Xs × Ys) of a dimension Xs in the x direction and a dimension Ys in the y direction.

At a height of 2 cm from the back surface of the bottom part of the container, the ratio Rb of the cross-sectional area of the positive electrode to the area (S) of the region surrounded by the inner edge of the container is 0.30 or more. The cross-sectional area (Sp) of the positive electrode is represented by Sp = x1 × d × n using the dimension (x1) of the positive electrode in the x direction, the thickness (d) of the positive electrode, and the number (n) of positive electrodes included in one element. That is, the ratio Rb is represented by Sp/S. The volume of the positive electrode in the element is designed to be as large as possible.

In order to increase the ratio Rb, the number of the plurality of positive electrodes constituting the element may be the same as the number of the plurality of negative electrodes or larger by one in number than the number of the negative electrodes. For example, the positive electrode may be disposed at one end part in the stacking direction of the element, and the negative electrode may be disposed at the other end part. Alternatively, the positive electrodes may be disposed at both end parts in the stacking direction of the element. The positive electrode may be contained in a bag-shaped separator. Conventionally, in order to ensure low-temperature high-rate performance, the negative electrodes are often disposed at both end parts in the stacking direction of the element.

Even when a pressure in the thickness direction is applied to the element, a gap may be present between the element and the container. For example, when the member disposed on the outermost side is the separator, the rib is present on the outer surface of the separator, and the rib faces the side wall or the partition of the container, the height of the rib of the separator is not included in the dimension of the element in the y direction. Meanwhile, when the tip of the rib is in contact with the side wall or the partition, the height of the rib regulates the dimension of the cross-sectional area Se of the electrolyte solution in the y direction. Since the rib of the separator has a certain degree of flexibility, the rib may be deformed by being pushed by the side wall or the partition. In this case, the height of the rib after deformation restricts the dimension of the cross-sectional area Se of the electrolyte solution in the y direction.

Similarly, when the dimension of the cross-sectional area Se of the electrolyte solution in the y direction is obtained, the height of the rib is not included in the dimension in the y direction when the rib is present on the side wall or the partition of the container. When both the side wall or the partition and the separator include ribs, and the tips of the ribs are in contact with the side wall or the partition, the sum of the height of the rib of the separator (the height of the rib after deformation when the rib is deformed) and the height of the rib of the side wall or the partition regulates the dimension of the cross-sectional area Se of the electrolyte solution in the y direction.

According to the above configuration, the cycle durability of the lead-acid battery used in PSOC can be remarkably improved. The reason for this is considered to be that stratification due to sedimentation of the electrolyte solution occurring during charging is suppressed, and as a result, the life is not regulated by the stratification. That is, in order to suppress the stratification, it is effective to reduce the amount of the electrolyte solution present around the lower part of the element until Ra ≤ 0.20 is satisfied, and increase the amount of sulfuric acid held in the positive electrode until 0.3 ≤ Rb is satisfied.

It is considered that the stratification proceeds according to the following mechanism. For example, in the positive electrode, lead sulfate is oxidized during charging to generate sulfuric acid. Next, the sulfuric acid moves inside the positive electrode up to the interface between the positive electrode and the electrolyte solution, and the sulfuric acid is released from the interface to the outside of the positive electrode. Thereafter, the sulfuric acid is precipitated by natural convection due to the density difference of the electrolyte solution.

In contrast to the above mechanism, when Ra ≤ 0.20 is satisfied, it is considered that natural convection due to the density difference of the electrolyte solution is suppressed, and a state where the sulfuric acid generated during charging hardly settles is continued. Since the internal structure of the positive electrode is fine, the sulfuric acid is less likely to move inside the positive electrode as compared with the negative electrode and the separator. Therefore, when the occupancy of the positive electrode in the element increases as 0.3 ≤ Rb is satisfied, the amount of the sulfuric acid released into the electrolyte solution around the element is significantly reduced. It is considered that the stratification is remarkably suppressed by suppressing the movement of the sulfuric acid in two paths of the inside and outside of the positive electrode. In order to cause the positive electrode to retain as much sulfuric acid as possible, it is desirable to increase the occupied volume of the positive electrode in a space in which the electrolyte solution can be stored as much as possible. In order to satisfy Ra ≤ 0.20 and 0.3 ≤ Rb, for example, the dimension X of the element in the x direction may be as large as possible, and the dimension Xs of the cross-sectional area (S) of the cell chamber in the x direction may be as small as possible.

The difference Δx between the dimension Xs of the region (cell chamber) surrounded by the inner edge of the container in the x direction and the dimension X of the element in the x direction is desirably, for example, 14 mm or less, and may be 12 mm or less. In this case, the distance from one end part of the element in the x direction to the inner edge of the container is desirably, for example, 7 mm or less, and may be 6 mm or less. Δx/Xs is desirably 0.12 or less, and may be 0.10 or less, or 0.08 or less. In other words, in the cross-section CS, the ratio of the gap (Δx) between the inner edge of the container and the electrode group in the width direction of the element to the distance (Xs) between the inner edges of the container in the width direction of the element may be 0.12 or less, 0.10 or less, or 0.08 or less.

The difference Δy between the dimension Ys of the region (cell chamber) surrounded by the inner edge of the container in the y direction and the dimension Y of the element in the y direction is desirably, for example, 2.5 mm or less, and may be 2.0 mm or less. In this case, the distance from one end part of the element in the y direction to the inner edge of the container is desirably, for example, 1.25 mm or less, and may be 1.0 mm or less. Δy/Ys is desirably 0.07 or less, and may be 0.05 or less or 0.04 or less. In other words, in the cross-section CS, the ratio of the gap (Δy) between the inner edge of the container and the electrode group in the thickness direction of the element to the distance (Ys) between the inner edges of the container in the thickness direction of the element may be 0.07 or less, 0.05 or less, or 0.04 or less.

In particular, it is considered that the natural convection of the electrolyte solution can be effectively suppressed by reducing Δx/Xs. In particular, when Δy/Ys is limited to 0.07 or 0.06 or less, the destination of the electrolyte solution is likely to concentrate in the gap between the end part of the element having a relatively large space in the x direction and the container. When Δx/Xs is limited as described above, such movement of the electrolyte solution is also greatly limited, and thus it is considered that the stratification is more remarkably suppressed.

Here, when the positive electrode material contains antimony, the cycle durability of the lead-acid battery used in PSOC is further remarkably improved. In that case, the content of antimony in the positive electrode material is desirably 0.01% by mass or more. When the positive electrode material contains Sb, the falling of the positive electrode material due to softening is suppressed. As a result of reducing the influence of stratification on the life, the cycle durability is easily affected by the softening of the positive electrode material. By suppressing such softening of the positive electrode material, the life can be further extended.

Meanwhile, when the negative electrode material contains a carbonaceous material, the cycle durability of the lead-acid battery used in PSOC can be further remarkably improved. This is because the presence of the carbonaceous material in the negative electrode material improves conductivity in the negative electrode material and suppresses the sulfation of the negative electrode. Such an effect tends to be specifically increased when Ra ≤ 0.20 and 0.3 ≤ Rb are satisfied. It is considered that since the sulfation is considerably suppressed, the uniformization of the reaction due to improvement of the conductivity in the negative electrode material is promoted, the overall utilization factor of the negative electrode and the positive electrode is improved, and the local deterioration of the plate is suppressed. Meanwhile, in the case of Ra > 0.20 or 0.3 > Rb, the stratification is a dominant factor that regulates the cycle durability, and thus it is considered that improvement of the conductivity due to the carbonaceous material does not significantly affect the cycle durability.

Examples of the carbonaceous material contained in the negative electrode material include carbon black, graphite, hard carbon, and soft carbon. Examples of the carbon black include acetylene black, furnace black, and lamp black. Furnace black also includes ketjen black (product name). The graphite may be a carbonaceous material including a graphite-type crystal structure and may be either artificial graphite or natural graphite. The negative electrode material may contain one kind or two or more kinds of carbonaceous materials.

The content of the carbonaceous material in the negative electrode material is desirably 0.3% by mass or more. The content of the carbonaceous material in the negative electrode material may be 0.45% by mass or more, 1.0% by mass or more, or 1.2% by mass or more. The content of the carbonaceous material is, for example, 5% by mass or less and may be 3% by mass or less.

In order to improve the conductivity more remarkably in the negative electrode material, it is desirable to use graphite as the carbonaceous material. Graphite may account for 70% by mass or more or 100% of the carbonaceous material.

The lead-acid battery may be a flooded-type battery (vent type battery), or a valve regulated lead-acid battery (VRLA). However, in consideration of the above mechanism, it is considered that the configuration of the present invention exhibits a particularly high effect in the flooded-type battery.

Hereinafter, the lead-acid battery according to an embodiment of the present invention will be described for each of main constituent elements, but the present invention is not limited to the following embodiment.

### [Negative electrode]

The negative electrode includes a negative electrode material and a negative current collector. The negative electrode can be obtained in such a manner that a negative current collector is coated or filled with a negative electrode paste, which is then cured and dried to prepare an unformed negative electrode, and thereafter, the unformed negative electrode is formed. The negative electrode paste is prepared, for example, by kneading a lead powder, an additive used as necessary, and water and sulfuric acid (or sulfuric acid aqueous solution). The unformed negative electrode may be cured at a temperature higher than room temperature and high humidity.

The formation can be performed by charging the element in a state where the element including the unformed negative electrode is immersed in the electrolyte solution containing sulfuric acid in the container of the lead-acid battery. However, the formation may be performed before the lead-acid battery or the element is assembled. The formation produces spongy lead.

The negative electrode material contains a negative active material (specifically, lead or lead sulfate) that exhibits a capacity through a redox reaction, and an additive used as necessary.

Examples of the additive include an organic expander, a carbonaceous material, barium sulfate, and a reinforcing material.

It is known that the organic expander has an action of improving the life performance of the lead-acid battery and improving the discharge performance at low temperature. Examples of the organic expander include lignin, lignin derivatives, and synthetic organic expanders (such as formaldehyde condensate of phenol compound).

Examples of the lignin derivative include lignin sulfonic acid and salts thereof (alkali metal salts and the like). The negative electrode material may contain one kind or two or more kinds of organic expanders.

The content of the organic expander in the negative electrode material is, for example, 0.01% by mass or more, and may be 0.03% by mass or more. The content of the organic expander is, for example, 1.0% by mass or less and may be 0.6% by mass or less.

The content of barium sulfate in the negative electrode material may be 0.05% by mass or more and 3% by mass or less, or may be 0.1% by mass or more and 2% by mass or less.

The negative current collector may be formed by casting lead (Pb) or a lead alloy, or may be formed by processing a lead sheet or a lead alloy sheet. Examples of the processing method include expanding processing and punching processing. When a grid-like current collector is used as the negative current collector, it is easy to support the negative electrode material.

The lead alloy used for the negative current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like.

The negative current collector may include a surface layer. The surface layer of the negative current collector and the inside thereof may have different compositions. The surface layer may be formed in a part of the negative current collector. The surface layer may be formed in the lug part of the negative current collector. The surface layer of the lug part may contain Sn or a Sn alloy.

### «Analysis»

Hereinafter, a method for analyzing the additive contained in the negative electrode material will be described. Prior to measurement or analysis, the lead-acid battery actually in the full charge state is disassembled to obtain a negative electrode to be analyzed.

The lead-acid battery may be a lead-acid battery immediately after formation or after a lapse of time from the formation as long as the lead-acid battery is formed. For example, the lead-acid battery may be a lead-acid battery in use after formation (preferably in the initial stage of use). The lead-acid battery at the initial stage of use refers to a lead-acid battery that has not been used for a long time (for example, within two months from the start of use) and has hardly deteriorated.

Here, the full charge state of the flooded-type lead-acid battery is defined by the definition of JIS D 5301:2019. More specifically, the following state is defined as the full charge state: the lead-acid battery is charged in a water bath at 25°C ± 2°C at a current (A) 0.2 times as large as a numerical value (numerical value whose unit is Ah) described as a rated capacity until a terminal voltage (V) during charge measured every 15 minutes or an electrolyte solution density subjected to temperature correction to 20°C exhibits a constant value at three significant digits continuously three times. In the case of a valve regulated lead-acid battery, the full charge state is a state where the lead-acid battery is subjected to constant current constant voltage charge of 2.23 V/cell at the current (A) 0.2 times as large as the numerical value (numerical value whose unit is Ah) described as the rated capacity in an air tank of 25°C ± 2°C, and the charge is completed when the charge current during constant voltage charge becomes a value (A) of 0.005 times as large as the numerical value (numerical value whose unit is Ah) described in the rated capacity.

The obtained negative electrode is washed with water to remove sulfuric acid from the negative electrode. The washing with water is performed until it is confirmed that color of a pH test paper does not change by pressing the pH test paper against the surface of the negative electrode plate washed with water. However, the washing with water is performed within two hours. The negative electrode washed with water is dried at 60 ± 5°C in a reduced pressure environment for about six hours. After drying, when the sticking member is included in the negative electrode plate, the sticking member is removed by peeling. Next, the negative electrode material is separated from the negative electrode to obtain a sample (hereinafter referred to as sample A). The sample A is ground as necessary and subjected to analysis.

### (1) Analysis of organic expander

### (1-1) Qualitative analysis of organic expander in negative electrode material

The pulverized sample A is immersed in a 1 mol/L sodium hydroxide aqueous solution to extract the organic expander. If the extract contains a plurality of organic expanders, the organic expander is separated from the extract as necessary. For each separated material containing each organic expander, insoluble components are removed by filtration, and the obtained solution is desalted, then concentrated, and dried. The desalination is performed by using a desalination column, by causing the solution to pass through an ion-exchange membrane, or by placing the solution in a dialysis tube and immersing the solution in distilled water. The solution is dried to obtain a powder sample (hereinafter, referred to as a sample B) of the organic expander.

A type of the organic expander is determined from a combination of information obtained from, for example, an infrared spectroscopic spectrum measured using the sample B of the organic expander, an ultraviolet-visible absorption spectrum measured by an ultraviolet-visible absorption spectrometer after the sample B is diluted with distilled water or the like, an NMR spectrum of a solution obtained by dissolving the sample B in a predetermined solvent such as heavy water, or pyrolysis GC-MS enabling acquirement of information of individual compounds forming a substance.

When the extract contains a plurality of organic expanders, the organic expanders are separated as follows. First, the extract is measured by infrared spectroscopy, NMR, and/or GC/MS to determine whether or not a plurality of types of organic expanders are contained. Next, a molecular weight distribution is measured by GPC analysis of the extract, and if the plurality of types of organic expanders can be separated by molecular weight, the organic expander is separated by column chromatography based on a difference in molecular weight. When it is difficult to separate the organic expander due to the difference in molecular weight, the organic expander is separated by a precipitation separation method using a difference in solubility that varies depending on the type of the functional group and/or the amount of the functional group of the organic expander. For example, when two kinds of organic expanders are separated, an aqueous sulfuric acid solution is added dropwise to a mixture obtained by dissolving the extract in an NaOH aqueous solution to adjust the pH of the mixture, thereby aggregating and separating one of the organic expanders. The insoluble component is removed by filtration as described above from the separated material dissolved again in the NaOH aqueous solution. The remaining solution after separating one of the organic expanders is concentrated. The obtained concentrate contains the other organic expander, and the insoluble component is removed from the concentrate by filtration as described above.

### (1-2) Quantitative determination of content of organic expander in negative electrode material

Similar to the above (1-1), for each separated material containing the organic expander, a solution is obtained after removing the insoluble component by filtration. The ultraviolet-visible absorption spectrum of each obtained solution is measured. The content of each organic expander in the negative electrode material is determined using an intensity of a characteristic peak of each organic expander and a standard curve prepared in advance.

When a lead-acid battery in which the content of the organic expander is unknown is obtained and the content of the organic expander is measured, a structural formula of the organic expander cannot be strictly specified, so that the same organic expander may not be used for the standard curve. In this case, the content of the organic expander is measured using the ultraviolet-visible absorption spectrum by creating a calibration curve using the organic expander extracted from the negative electrode of the battery and a separately available organic polymer in which the ultraviolet-visible absorption spectrum, the infrared spectroscopic spectrum, the NMR spectrum, and the like exhibit similar shapes.

### (2) Quantitative determination of carbonaceous material and barium sulfate

To 10 g of the pulverized sample A, 50 mL of nitric acid having a concentration of 20% by mass is added, followed by heating for about 20 minutes to dissolve the lead component as lead ions. Next, the resulting solution is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at 110°C ± 5°C. The filtered sample is a mixed sample of the carbonaceous material and barium sulfate. The mass of the membrane filter is subtracted from the total mass of the mixed sample (hereinafter, referred to as sample C) and the membrane filter after drying to measure the mass of sample C (Mm). Thereafter, the sample C is placed in a crucible together with a membrane filter and is burned and incinerated at 1,300°C or higher. The residue remaining is barium oxide. The mass of barium sulfate (MB) is determined by converting the mass of barium oxide to the mass of barium sulfate. The mass of the carbonaceous material is calculated by subtracting the mass MB from the mass Mm.

### [Positive electrode]

The positive electrode can be classified into a paste-type, a clad-type, and the like. A positive electrode of a lead-acid battery mounted on a vehicle subjected to idling stop control is generally a paste-type positive electrode.

The paste-type positive electrode includes a positive electrode material and a positive current collector. The positive electrode can be obtained in such a manner that a positive current collector is coated or filled with a positive electrode paste, which is then cured and dried to prepare an unformed positive electrode, and thereafter, the unformed positive electrode is formed. The positive electrode paste is prepared, for example, by kneading a lead powder, an additive (for example, antimony trioxide) used as necessary, and water and sulfuric acid (or sulfuric acid aqueous solution). The unformed positive electrode plate may be cured at a temperature higher than room temperature and high humidity.

The formation can be performed by charging the element in a state where the element including the unformed positive electrode is immersed in the electrolyte solution containing sulfuric acid in the container of the lead-acid battery. However, the formation may be performed before the lead-acid battery or the element is assembled.

The positive electrode material contains a positive active material (lead dioxide or lead sulfate) that exhibits a capacity through a redox reaction, and may contain an additive as necessary.

Examples of the additive include antimony (Sb). When the positive electrode material contains antimony, the cycle durability of the lead-acid battery used in PSOC is further remarkably improved. When the positive electrode material contains Sb, the falling of the positive electrode material due to softening is suppressed.

In that case, the content of antimony in the positive electrode material is desirably 0.01% by mass or more, and may be 0.03% by mass or more. The content of antimony in the positive electrode material may be, for example, less than 0.5% by mass, 0.4% by mass or less, or 0.1% by mass or less.

A quantitative analysis method of antimony is shown below.

First, the positive electrode is taken out from the lead-acid battery, sulfuric acid is removed within 2 hours by washing with water, and the positive electrode is dried by blowing air at 60 ± 5°C. Next, an appropriate amount of a sample of the positive electrode material in the dried state is collected from the positive electrode, and the mass of the sample is measured. Next, the entire amount of the sample is dissolved in a mixed aqueous solution containing tartaric acid, nitric acid, and hydrogen peroxide. The solution obtained by the dissolution of the entire amount is diluted with ion-exchanged water as necessary to define a volume, and thereafter, emission intensity of Sb in the solution is measured by ICP emission spectroscopy. The mass of Sb contained in the solution is obtained using a previously-produced calibration curve. The ratio of the mass of Sb to the mass of the sample of the positive electrode active material subjected to analysis is determined as the content of Sb.

The positive current collector of the paste-type positive electrode plate may be formed by casting lead (Pb) or a lead alloy, or may be formed by processing a lead sheet or a lead alloy sheet. Examples of the processing method include expanding processing and punching processing. By using a grid-like current collector as the positive current collector, the positive electrode material is easily supported. The positive current collector may include a surface layer. The surface layer of the positive current collector and the inside thereof may have different compositions. The surface layer may be formed in a part of the positive current collector. The surface layer may be formed only on the grid portion, only on the lug portion, or only on the frame rib portion of the positive current collector.

The lead alloy used for the positive current collector is preferably a Pb-Sb-based alloy, a Pb-Ca-based alloy, or a Pb-Ca-Sn-based alloy.

### [Electrolyte solution]

The electrolyte solution is an aqueous solution containing sulfuric acid and may be gelled as necessary. The polymer compound may be contained in the electrolyte solution.

The electrolyte solution may contain cations (for example, metal cations) and/or anions (for example, anions other than sulfate anions (such as phosphate ions)) as necessary. Examples of the metal cation include at least one selected from the group consisting of a Na ion, a Li ion, a Mg ion, and an Al ion.

### [Separator]

As the separator disposed between the negative electrode and the positive electrode, for example, at least one selected from a nonwoven fabric and a microporous membrane is used.

The nonwoven fabric is a mat in which fibers are intertwined without being woven and is mainly made of fibers. For example, 60% by mass or more of the nonwoven fabric is formed of fibers. As the fibers, there can be used glass fibers, polymer fibers (polyolefin fiber, acrylic fiber, polyester fiber (polyethylene terephthalate fiber, or the like), and the like), pulp fibers, and the like. Among these, glass fibers are preferable. The nonwoven fabric may contain components in addition to the fibers, such as acid-resistant inorganic powder, a polymer as a binder, and the like.

The microporous membrane is a porous sheet mainly made of components except for fiber components and is obtained by, for example, extrusion molding a composition containing, for example, a pore-forming additive into a sheet shape and then removing the pore-forming additive to form pores. The microporous membrane is preferably made of a material having acid resistance and is preferably composed mainly of a polymer component. As the polymer component, a polyolefin (polyethylene, polypropylene, or the like) is preferable. Examples of the pore-forming additive include a polymer powder and oil.

The separator may be, for example, made of only a nonwoven fabric or made of only a microporous membrane. The separator may be a stacked article of a nonwoven fabric and a microporous membrane, a stacked article of different or the same kind of materials, or a stacked article of different or the same kind of materials in which recesses and projections are engaged to each other.

The separator may have a sheet shape or may be formed in a bag shape. One sheet-like separator may be disposed between the positive electrode and the negative electrode. The plate may be sandwiched by the folded sheet-like separator. The positive electrode sandwiched by the folded sheet-like separator and the negative electrode sandwiched by the folded sheet-like separator may be overlapped, or one of the positive electrode and the negative electrode may be sandwiched by the folded sheet-like separator and overlapped with the other plate. When the bag-shaped separator is used, the bag-shaped separator may store the positive electrode or may store the negative electrode.

In the present specification, the up-down direction of the lead-acid battery or constituent elements (such as plate, container, and separator) of the lead-acid battery means the up-down direction of the lead-acid battery in the vertical direction when the lead-acid battery is in use. Each of the positive electrode and the negative electrode includes a lug part for connecting to an external terminal. In a horizontal valve regulated lead-acid battery or the like, the lug part may be provided at a side part of the plate so as to protrude laterally; however, in many lead-acid batteries, the lug part is usually provided at an upper part of the plate so as to protrude upward.

Fig. 1 shows an appearance of an example of a lead-acid battery according to an embodiment of the present invention. A lead-acid battery 1 includes a container 12 that stores an element 11 and an electrolyte solution (not shown). An inside of the container 12 is partitioned by partitions 13 into a plurality of cell chambers 14. Each of the cell chambers 14 contains one element 11. An opening of the container 12 is closed with a lid 15 including a positive electrode terminal 16 and a negative electrode terminal 17. A vent plug 18 is provided in the lid 15 for each cell chamber. At the time of water addition, the vent plug 18 is removed to supply a water addition liquid. The vent plug 18 may have a function of discharging gas generated in the cell chamber 14 to the outside of the battery.

The element 11 is formed by alternately stacking each of a plurality of negative electrode plates 3 and each of a plurality of positive electrode plates 2 with a separator 4 interposed therebetween. The separator 4 has a bag shape, with one positive electrode plate 2 packaged in one separator 4. In the cell chamber 14 located at one end of the container 12, a positive electrode shelf 6 connecting lug parts 2a of a plurality of positive electrode plates 2 in parallel is connected to a penetrating connection body 8, and a negative electrode shelf 5 connecting lug parts 3a of a plurality of negative electrode plates 3 in parallel is connected to a negative pole 7. The negative pole 7 is connected to the negative electrode terminal 17 outside the lid 15. In the cell chamber 14 located at the other end part of the container 12, a positive pole 9 is connected to the positive electrode shelf 6, and the penetrating connection body 8 is connected to the negative electrode shelf 5. The positive pole 9 is connected to the positive electrode terminal 16 outside the lid 15. Each of the penetrating connection bodies 8 passes through a through-hole provided in the partition 13 to connect the elements 11 of the adjacent cell chambers 14 in series.

The positive electrode shelf 6 is formed by welding the lug parts 2a, provided on the upper parts of the respective positive electrode plates 2, to each other by a cast-on-strap method or a burning method. The negative electrode shelf 5 is also formed by welding the lug parts 3a, provided on the upper parts of the respective negative electrode plates 3, to each other in accordance with the case of the positive electrode shelf 6.

The lid 15 of the lead-acid battery in the illustrated example has a single structure (single lid), but is not limited thereto. The lid 15 may have, for example, a double structure including an inner lid and an outer lid (or an upper lid). The lid having the double structure may have a reflux structure between the inner lid and the outer lid for returning the electrolyte solution into the battery (inside the inner lid) through a reflux port provided in the inner lid.

In the present specification, the PSOC cycle durability is evaluated by the following procedures.

### <PSOC cycle durability>

In a water tank at 25°C ± 3°C, in steps 1 to 4 shown in Table 1 below, the number of cycles until a voltage between terminals reaches 1.67 V/cell is used as the index of the PSOC cycle durability. In Table 1, CC discharge means constant current discharge, and CV charge means constant voltage charge. In the present specification, 1 CA is a current value (A) having the same numerical value as the rated capacity (Ah) of the battery. For example, for a battery having a rated capacity of 30 Ah, 1 CA is 30 A and 1 mCAis 30 mA. "Adjusted discharge" is discharge for adjusting a DOD (discharge depth) before repeating the cycles of steps 2 and 3. "I₂₀" indicates a 20 hour rate current, and 1CA = 20 × I₂₀ is set. The 20 hour rate current refers to a current of 0.05 times (1/20) a current value (A) having the same numerical value as the rated capacity (Ah) of the battery.

**[Table 1]**

| Step | Contents | Test condition | |
|---|---|---|---|
| | | Current, voltage, and number of times of repeat | Termination condition |
| 1 | Adjustment discharge | 4 × I₂₀ (A) | 2.5 hours |
| 2 | Charge | 7 × I₂₀ (A) /2.4 (V) | 40 minutes |
| 3 | Discharge | 7 × I₂₀ (a) | 30 minutes |
| 4 | Repetition of steps 2, 3 | Until reaching 10 (V) or less | - |

The lead-acid battery according to the present invention will be summarized below.
(1) A lead-acid battery including: an element; an electrolyte solution; and a container,
   wherein the element includes a positive electrode, a negative electrode, and a separator,
   in a cross section parallel to a bottom part of the container of the lead-acid battery, a ratio Ra of a cross-sectional area of the electrolyte solution present outside an outer edge of the element to a cross-sectional area of the element is 0.20 or less, and
   a ratio Rb of a cross-sectional area of the positive electrode to an area of a region surrounded by an inner edge of the container is 0.30 or more.
(2) A lead-acid battery including: an element; an electrolyte solution; and a container,
   wherein the element includes a positive electrode, a negative electrode, and a separator,
   in a cross section parallel to a bottom part of the container of the lead-acid battery, a ratio Ra of an area obtained by excluding a cross-sectional area of the element from a cross-sectional area inside the container storing the element to the cross-sectional area of the element is 0.20 or less, and
   a ratio Rb of a cross-sectional area of the positive electrode to the cross-sectional area inside the container is 0.30 or more.
(3) The lead-acid battery according to the above (1) or (2), wherein
   the positive electrode material contains antimony, and
   a content of the antimony in the positive electrode material is 0.01% by mass or more.
(4) The lead-acid battery according to any one of the above (1) to (3), wherein
   the negative electrode material contains a carbonaceous material, and
   a content of the carbonaceous material in the negative electrode material is 0.3% by mass or more.
(5) The lead-acid battery according to the above (4), wherein the carbonaceous material is graphite.
(6) The lead-acid battery according to any one of the above (1) to (5), wherein the lead-acid battery is used in PSOC.
(7) The lead-acid battery according to the above (6), wherein the lead-acid battery is mounted on a vehicle subjected to idling stop control.
(8) The lead-acid battery according to any one of the above (1) to (7), wherein
   in the cross section,
   a ratio of a gap (Δx) between an inner edge of the container and the electrode group in a width direction of the element to a distance (X) between inner edges of the container in the width direction of the element is 0.12 or less, and
   a ratio of a gap (Δy) between an inner edge of the container and the electrode group in a thickness direction of the element to a distance (Y) between inner edges of the container in the thickness direction of the element is 0.07 or less.
(9) The lead-acid battery according to any one of the above (1) to (8), wherein the lead-acid battery is a flooded-type lead-acid battery.
(10) The lead-acid battery according to the above (9), wherein
   an area S1 surrounded by an inner edge of the container in a cross section of the lead-acid battery at a height of 2 cm from a back surface of the bottom part of the container,
   an area S2 surrounded by an inner edge of the container in a cross section of the lead-acid battery at a depth of 2 cm from a liquid level of the container, and
   an area S3 surrounded by an inner edge of the container in a cross section of the lead-acid battery at an intermediate depth of the liquid level of the container are substantially the same.

### EXAMPLES

Hereinafter, the present invention will be specifically described based on Examples and Comparative Examples, but the present invention is not limited to the following Examples.

### «Examples 1 to 4 and Comparative Examples 1 to 12»

### (a) Preparation of negative electrode

A lead powder as a raw material, sodium lignin sulfonate (organic expander), barium sulfate, and carbon black are mixed with an appropriate amount of an aqueous sulfuric acid solution to obtain a negative electrode paste. The respective components are mixed so that the content of sodium lignin sulfonate in the negative electrode material is 0.1% by mass, the content of barium sulfate is 0.4% by mass, and the content of carbon black is 0.2% by mass, all of which are determined by the procedures described above. The concentration and amount of the aqueous sulfuric acid solution are adjusted so that the density of the negative electrode material contained in a lead-acid battery in a full charge state after formation is 3.6 g/cm³. The negative electrode paste is filled in a mesh part of an expanded grid made of a Pb-Ca-Sn alloy which is a negative current collector, and cured and dried to obtain an unformed negative electrode.

### (b) Preparation of positive electrode

A lead powder as a raw material is mixed with an aqueous sulfuric acid solution to obtain a positive electrode paste. The positive electrode paste is filled in a mesh part of an expanded grid made of a Pb-Ca-Sn alloy which is a positive current collector, and cured and dried to obtain an unformed positive electrode.

### (c) Preparation of test battery

In a test battery, the rated voltage of six cells each having a rated voltage of 2 V and connected in series is 12 V, and the rated 20 hour rate capacity is 59 Ah. The rated 20 hour rate capacity is a capacity during discharge from a full charge state to a DOD (discharge depth) 100% at a 20 hour rate current. An element of the test battery includes seven positive electrode plates and eight negative electrode plates, the positive electrode plates being stored in a bag-shaped separator. The bag-shaped separator is formed of a microporous membrane made of polyethylene. The element is stored in a container made of polypropylene together with an electrolyte solution (aqueous sulfuric acid solution). The container includes six cell chambers. An element is stored in each cell chamber.

Then, formation is performed in the container to prepare a flooded-type lead-acid battery. Thereafter, the specific gravity of the electrolyte solution at 20°C is adjusted to 1.28, and lead-acid batteries for testing are completed.

Here, by changing the internal dimension of the cell chamber of the container, a ratio Ra of the cross-sectional area of the electrolyte solution present outside the outer edge of the element to the cross-sectional area of the element, and a ratio Rb of the cross-sectional area of the positive electrode to the area of the region surrounded by the inner edge of the container are changed as shown in Table 2A, and Δx, Δy, Δx/Xs, and Δy/Ys are changed as shown in Table 2B.

The PSOC cycle durability is evaluated by the procedures described above. The results of each battery are shown in Table 2 as relative values (%) when the numerical values of the results of the battery B6 are 100%. The larger the numerical value, the more excellent the PSOC cycle durability.

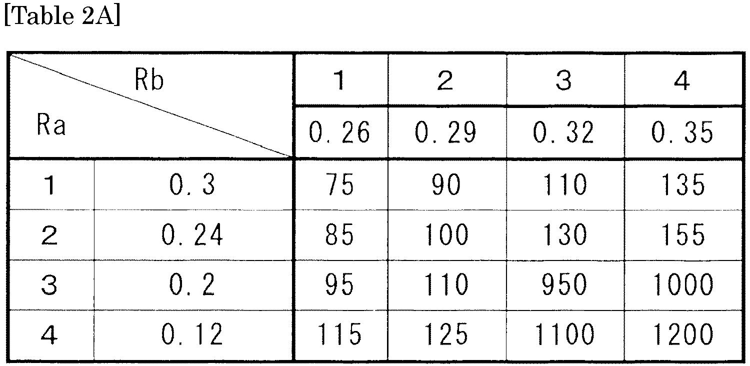

**[Table 2B]**

| | | Δx | Δy | Δx/Xs | Δy/Ys |
|---|---|---|---|---|---|
| 1 | 0. 3 | 23.8 | 3.2 | 0. 15 | 0.091 |
| 2 | 0. 24 | 19.3 | 2.9 | 0. 12 | 0. 081 |
| 3 | 0. 2 | 16.5 | 2.4 | 0. 11 | 0. 067 |
| 4 | 0. 12 | 11.0 | 1.3 | 0. 071 | 0. 037 |

As shown in Table 2A, it can be understood that when Ra ≤ 0.20 and 0.3 ≤ Rb are satisfied, the PSOC cycle durability is remarkably improved to 6 times to 16 times of that when the PSOC cycle durability is not satisfied. As shown in Table 2B, it can be understood that Δx/Xs is preferably 0.12 or less, more preferably 0.08 or less, and Δy/Ys is preferably 0.07 or less, more preferably 0.04 or less.

Table 3 shows the correspondence relationship between Examples 1 to 4 and the batteries A1 to A4 and the correspondence relationship between Comparative Examples 1 to 12 and the batteries B1 to B12.

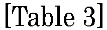

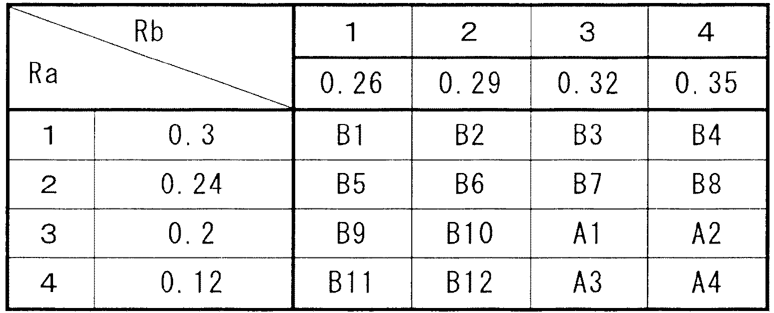

### «Examples 5 to 24»

Lead-acid batteries A5 to A24 are completed and evaluated in the same manner as in Example 1 (battery A1), except that graphite is contained in a negative electrode paste so that the content of graphite in a negative electrode material determined by the procedures described above is % by mass of a numerical value shown in Table 4Ain the preparation of a negative electrode, and antimony trioxide is contained in a positive electrode paste so that the content of antimony in a positive electrode material determined by the procedures described above is % by mass of a numerical value shown in Table 4Ain the preparation of a positive electrode.

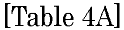

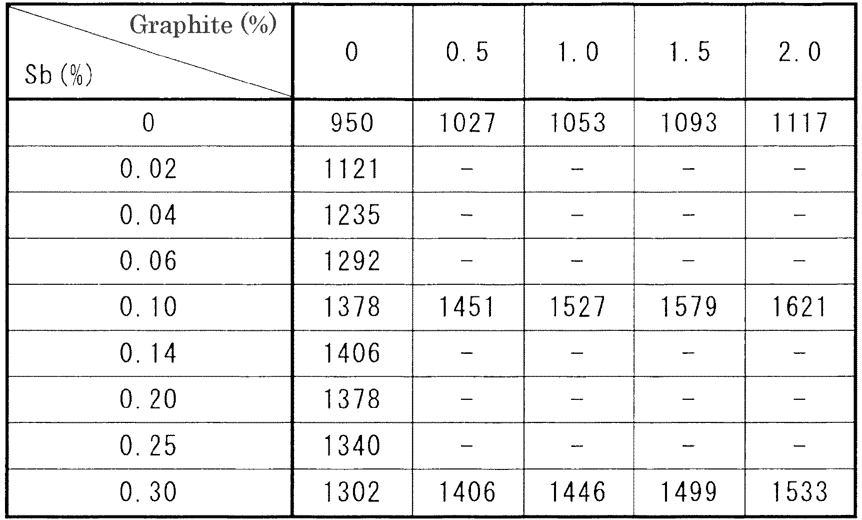

Table 4B shows the correspondence relationship between Examples 5 to 24 and the batteries A5 to A24.

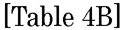

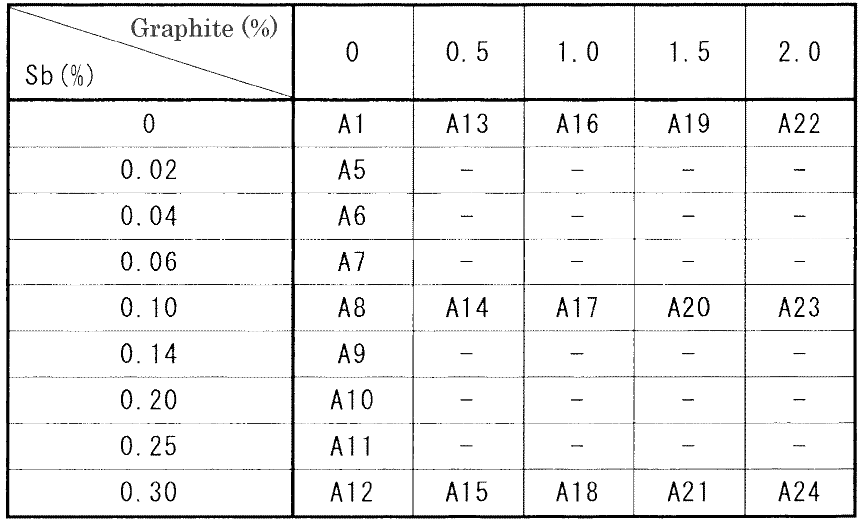

From Table 4, it can be understood that the inclusion of Sb and graphite further improves the PSOC cycle life. This is because the conductivity of the negative electrode is improved to suppress sulfation, and the life is not significantly regulated by the sulfation, and in addition, the softening and falling of the positive electrode are suppressed by the inclusion of Sb in the positive electrode material.

### <<Comparative Examples 13 to 31>>

Lead-acid batteries are completed and evaluated in the same manner as in Comparative Example 1 (battery B1), except that graphite is contained in a negative electrode paste so that the content of graphite in a negative electrode material determined by the procedures described above is % by mass of a numerical value shown in Table 5 in the preparation of a negative electrode, and antimony trioxide is contained in a positive electrode paste so that the content of antimony in a positive electrode material determined by the procedures described above is % by mass of a numerical value shown in Table 5 in the preparation of a positive electrode.

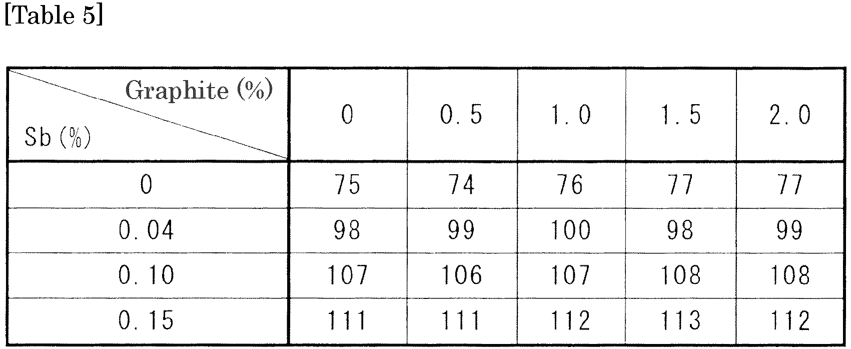

Table 6 shows the correspondence relationship between Comparative Examples 13 to 31 and the batteries B13 to B31.

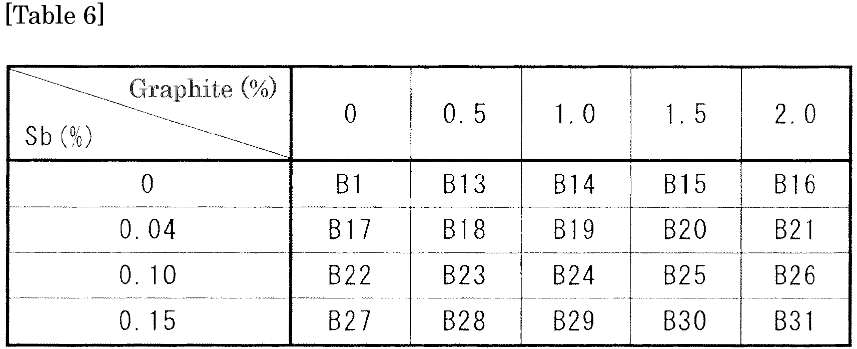

From Tables 5 and 6, it can be understood that when Ra ≤ 0.20 and 0.3 ≤ Rb are not satisfied, the cycle durability is improved when the positive electrode material contains Sb, but the cycle durability hardly changes even when the negative electrode material contains graphite at any Sb content. This is considered to be because sulfation due to stratification is a dominant factor of life regulation, and thus even if the conductivity of the negative electrode is improved, the cycle durability is hardly affected.

### INDUSTRIAL APPLICABILITY

The lead-acid battery according to the present invention is suitable for use in an idling stop vehicle as, for example, a lead-acid battery for IS that is charged and discharged under PSOC conditions. The lead-acid battery can be suitably used as, for example, a power source for starting a vehicle (automobiles, motorcycles, or the like), an industrial energy storage apparatus (for example, a power source of an electric vehicle (such as forklift) or the like), and the like. Note that these applications are merely illustrative and not limited to these applications.

### DESCRIPTION OF REFERENCE SIGNS

1: lead-acid battery
2: positive electrode plate
2a: lug part
3: negative electrode plate
3a: lug part
4: separator
5: negative electrode shelf
6: positive electrode shelf
7: negative pole
8: penetrating connection body
9: positive pole
11: element
12: container
13: partition
14: cell chamber
15: lid
16: positive electrode terminal
17: negative electrode terminal
18: vent plug

## Claims

1. A lead-acid battery comprising:
an element;
an electrolyte solution; and
a container,
wherein the element includes a positive electrode, a negative electrode, and a separator,
in a cross section parallel to a bottom part of the container of the lead-acid battery, a ratio Ra of a cross-sectional area of the electrolyte solution present outside an outer edge of the element to a cross-sectional area of the element is 0.20 or less, and
a ratio Rb of a cross-sectional area of the positive electrode to an area of a region surrounded by an inner edge of the container is 0.30 or more.

2. A lead-acid battery comprising:
an element;
an electrolyte solution; and
a container,
wherein the element includes a positive electrode, a negative electrode, and a separator,
in a cross section parallel to a bottom part of the container of the lead-acid battery, a ratio Ra of an area obtained by excluding a cross-sectional area of the element from a cross-sectional area inside the container storing the element to the cross-sectional area of the element is 0.20 or less, and
a ratio Rb of a cross-sectional area of the positive electrode to the cross-sectional area inside the container is 0.30 or more.

3. The lead-acid battery according to claim 1 or 2, wherein
the positive electrode material contains antimony, and
a content of the antimony in the positive electrode material is 0.01% by mass or more.

4. The lead-acid battery according to claim 1 or 2, wherein
the negative electrode material contains a carbonaceous material, and
a content of the carbonaceous material in the negative electrode material is 0.3% by mass or more.

5. The lead-acid battery according to claim 4, wherein the carbonaceous material is graphite.

6. The lead-acid battery according to any one of claims 1 to 5, wherein the lead-acid battery is used in PSOC.

7. The lead-acid battery according to claim 6, wherein the lead-acid battery is mounted on a vehicle subjected to idling stop control.

8. The lead-acid battery according to any one of claims 1 to 5, wherein
in the cross section,
a ratio Δx/X of a gap (Δx) between an inner edge of the container and the electrode group in a width direction of the element to a distance (X) between inner edges of the container in the width direction of the element is 0.12 or less, and
a ratio Δy/Y of a gap (Δy) between an inner edge of the container and the electrode group in a thickness direction of the element to a distance (Y) between inner edges of the container in the thickness direction of the element is 0.07 or less.

9. The lead-acid battery according to any one of claims 1 to 5, wherein the lead-acid battery is a flooded-type lead-acid battery.

10. The lead-acid battery according to claim 9, wherein
an area S1 surrounded by an inner edge of the container in a cross section of the lead-acid battery at a height of 2 cm from a back surface of the bottom part of the container,
an area S2 surrounded by an inner edge of the container in a cross section of the lead-acid battery at a depth of 2 cm from a liquid level of the container, and
an area S3 surrounded by an inner edge of the container in a cross section of the lead-acid battery at an intermediate depth of the liquid level of the container are substantially the same.
